(19) Europäisches Patentamt
European Patent Office
Office européen des brevets

(11) Numéro de publication : **0 616 972 A1**

(12) # DEMANDE DE BREVET EUROPEEN

(21) Numéro de dépôt : **94400568.5**

(22) Date de dépôt : **16.03.94**

(51) Int. Cl.$^5$ : **C01B 21/06,** C01B 21/068, C01B 31/30

(30) Priorité : **23.03.93 FR 9303305**

(43) Date de publication de la demande : **28.09.94 Bulletin 94/39**

(84) Etats contractants désignés : **AT BE CH DE DK ES FR GB GR IE IT LI LU NL SE**

(71) Demandeur : **ELF ATOCHEM S.A.**
**4 & 8, Cours Michelet**
**La Défense 10**
**F-92800 Puteaux (FR)**

(72) Inventeur : **Colombier, Christian**
**31, Allée des Marronniers**
**F-95120 Ermont (FR)**
Inventeur : **Disson, Jean-Pierre**
**74 rue Pierre Delore**
**F-69008 Lyon (FR)**
Inventeur : **Cuer, Jean-Pierre**
**2 Impasse des Troignes**
**F-69290 Craponne (FR)**

(54) **Procédé de préparation de poudre pour céramique en nitrure et/ou carbure métallique et/ou métalloidique par pyrolise-flash et la poudre ainsi obtenue.**

(57) Le procédé par pyrolyse-flash consiste à envoyer des gouttes grossières de précurseur de céramique dans une enceinte chauffée renfermant un gaz à une température et pendant un laps de temps suffisants pour obtenir une poudre. Le diamètre des gouttes formées est supérieur à 10 μm et l'enceinte est portée à une température supérieure à 500° C.

La poudre de nitrure et/ou de carbure métallique ou métalloïdique obtenue sous forme amorphe ou cristallisée comporte des particules sphériques de diamètre moyen supérieur à 0,2 μm dont 90 % d'entre-elles ont une taille inférieure à 0,4 μm. Cette poudre est avantageusement utilisée dans les domaines de l'automobile et de l'aéronautique pour la fabrication d'articles en céramique présentant de bonnes propriétés thermomécaniques.

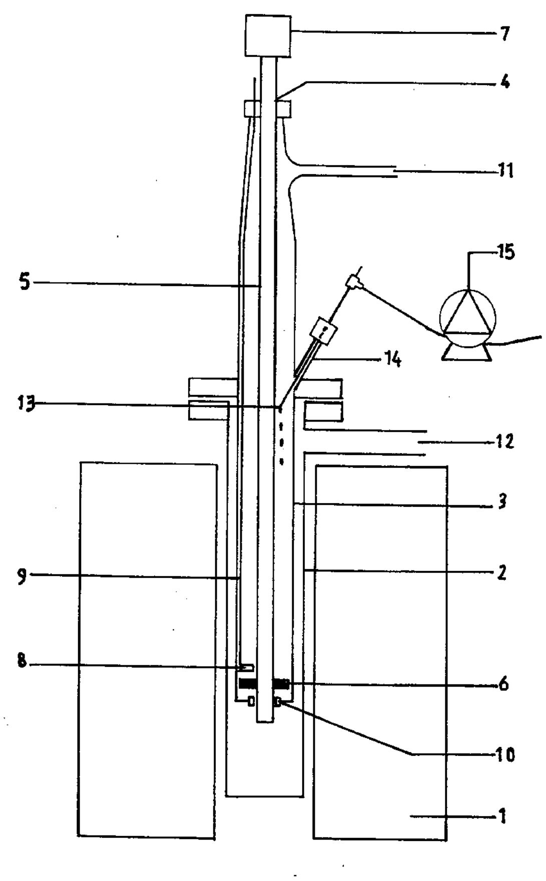


FIGURE 1

EP 0 616 972 A1

La présente invention concerne un procédé de préparation par pyrolyse-flash de poudre à base de nitrure et/ou de carbure métallique et/ou métalloïdique.

La présente invention concerne également la poudre de taille nanométrique, amorphe ou cristallisée, ainsi obtenue.

Des procédés de production de poudre de carbonitrure de silicium sont connus. Parmi ces procédés, on peut citer un procédé en phase vapeur (US 4,036,653) à partir de tétrachlorosilane, d'ammoniac et de méthane. La proportion des phases de carbure de silicium et de nitrure de silicium présentes dans la poudre est réglée par la composition du mélange gazeux initial. Le procédé présente le désavantage de produire de l'acide chlorhydrique et du chlorure d'ammonium. La poudre de carbonitrure de silicium obtenue présente une surface spécifique supérieure à 1 $cm^2/g$ et contient 0,1 à 5 % de carbone.

Gonsalves et al. [Advanced Materials, 3 n° 4, p. 202-204, (1991)] décrivent un procédé qui consiste à former un aérosol par projection de fines gouttelettes de précurseur au sein d'un faisceau laser. Le précurseur utilisé est un mélange d'organosilazanes monocycliques comportant 6 et 8 atomes dans le cycle et contenant quelques oligomères linéaires. Pour former les gouttes, il est nécessaire d'utiliser un diffuseur muni d'un système générateur d'ultrasons. Les grains de poudre amorphe obtenus présentent un diamètre moyen de 62 nm. Les particules de poudre cristallisée présentent une répartition bimodale dont les valeurs du diamètre moyen sont égales à 44,8 et 119,43 nm.

Le brevet US 4,594,330 décrit un procédé en phase vapeur qui consiste à chauffer un composé organosilicié exempt d'atomes d'halogène et d'oxygène. Selon ce procédé, il est nécessaire que ce composé puisse être vaporisé. Ce procédé permet de produire une poudre amorphe présentant des grains de taille inférieure à 0,2 μm ou cristallisée.

Mizutani et Liu [Ceramic Powder Science III, p. 59, (1990)] décrivent la pyrolyse de polysilazanes dans un four classique. Le procédé comporte une étape de formation de fines gouttelettes ayant un diamètre de quelques micromètres ce qui nécessite d'utiliser le polysilazane en solution diluée. La poudre amorphe obtenue se présente sous la forme de particules ayant un diamètre moyen de 0,38 μm présentant une déviation géométrique standard égale à 1,5.

Il a maintenant été trouvé un nouveau procédé de préparation de poudre de nitrure et/ou carbure métallique et/ou métalloïdique par pyrolyse-flash à partir de précurseur desdits nitrures et/ou carbures, ce procédé étant caractérisé en ce qu'il consiste à envoyer des gouttes grossières de précurseur dans une enceinte portée à une température et pendant un laps de temps suffisants pour obtenir une poudre. L'expression "gouttes grossières" désigne ici des gouttes dont le diamètre moyen est en général supérieur à 10 μm, de préférence à 50 μm et plus encore compris entre 100 μm et 5 mm.

Le procédé selon l'invention permet de fabriquer une poudre amorphe dont les grains présentent un diamètre supérieur à 0,2 μm. Ce procédé permet également d'obtenir une poudre cristallisée partiellement ou totalement comprenant des cristallites de taille nanométrique c'est-à-dire inférieure à 500 nm. Eventuellement, on peut augmenter la cristallinité de la poudre ainsi obtenue par un ou plusieurs traitements thermiques appropriés.

Dans le procédé selon l'invention, on forme des gouttes grossières ce qui a pour avantage essentiel que l'on peut utiliser un précurseur liquide ou fusible à la température d'utilisation, sans qu'il soit nécessaire de le diluer dans un solvant "classique". Par solvants "classiques", on entend ici tous les solvants exempts d'atomes appartenant au groupe constitué par Si, Al, Ti et B.

Un autre avantage de l'invention concerne la poudre amorphe obtenue dont la taille des grains permettent de contrôler la proportion d'oxygène. Dans le cas de poudres de nitrure et/ou de carbure de silicium ou de titane, il est en effet connu qu'un accroissement de la surface des grains conduit à une augmentation de la teneur en silice ou oxyde de titane par une oxydation superficielle du carbure et/ou du nitrure. Les oxydes ainsi formés provoquent une diminution du caractère réfractaire de la céramique.

A titre purement illustratif, le procédé et le dispositif qui permet sa mise en oeuvre sont présentés dans les figures 1 et 2 annexées.

Dans la figure 1, il est montré un dispositif selon l'invention constitué par un four tubulaire [1] permettant le chauffage d'un ensemble de tubes [2] et [3] formant une enceinte. A l'intérieur du tube [2] dont la base est fermée, est placé le tube [3] qui comporte à sa partie supérieure une ouverture [4] permettant le passage d'une tige [5] à la partie inférieure de laquelle est fixé un disque [6]. Le disque [6] est mis en rotation par l'intermédiaire de la tige [5] à l'aide du moteur [7]. Le disque [6] est surmonté d'un racloir [8] supporté par la tige [9]. La partie inférieure du tube [2] supporte intérieurement un système de guidage [10] de l'axe de la tige [5].

En conditions de fonctionnement, on introduit en continu par la tubulure latérale [11] du tube [3] un gaz qui est expulsé par l'évent [12]. Ce gaz, qui circule à co-courant des gouttes et de la poudre en formation, a notamment pour fonction d'évacuer les gaz formés au cours de la pyrolyse-flash. Ce gaz peut être choisi parmi l'azote, l'argon, l'hydrogène, l'ammoniac, l'hélium et les mélanges de ces gaz, l'azote étant préféré. Le précurseur contenu dans un récipient (non représenté) est introduit dans le tube [3] par le tube capillaire [13] engagé à l'intérieur de la tubulure [14]. La vitesse de formation des gouttes qui se forment à la sortie du tube [13] est réglée par le débit d'alimentation de la pompe [15]. Au fur et à mesure de leur formation, les grains de poudre sont déplacés par le racloir [8] vers le fond du tube [2].

Dans la figure 2, il est montré une variante du dispositif selon le procédé de l'invention. Le tube [20] est engagé dans un système de chauffage constitué par une série de fours tubulaires [21] superposés. La tubulure latérale [22] permettant l'introduction du gaz est placée dans la partie supérieure du tube [20]. Un raccord [23] situé au sommet du tube [20] est équipé d'un tube capillaire [24] permettant l'alimentation en précurseur (non représentée). Dans sa partie inférieure, le tube [20] possède un système de récupération de la poudre constitué, par exemple, par un ballon [25] comportant à sa partie supérieure un évent [26] permettant l'évacuation des gaz .

Le précurseur selon le procédé de l'invention est avantageusement choisi parmi les composés liquides ou fusibles en dessous de la température de formation de la poudre. Cette température est variable selon la nature du précurseur. A titre indicatif, on peut indiquer les valeurs comprises entre 200 et 500°C.

Le précurseur selon l'invention est choisi parmi les composés permettant d'obtenir une poudre de nitrure et/ou de carbure métallique et/ou métalloïdique renfermant N, C, H, O, M où M est choisi parmi le groupe constitué par Si, Al, Ti, B et dont la composition en poids est telle que N = 0 - 60 %, C = 0 - 40 %, H = 2 - 10 %, 0 = 0,8 - 10 % et M = 20 - 80 % , avec N et C ne pouvant pas être simultanément nuls.

Parmi les précurseurs selon l'invention, on peut citer à titre indicatif les dérivés du silicium tels que les polysilanes, les polysilazanes et les polysiloxazanes, les dérivés du titane tels que les composés issus de la réaction de $Ti[N(CH_3)_2]_4$ avec de l'ammoniac (voir J. Am. Ceram. Soc., 71 (1), p. 72-82, 1988).

Le précurseur selon l'invention peut avantageusement contenir un mélange de métaux et/ou métalloïdes choisis parmi le groupe constitué par Si, Al, Ti, B. A titre d'exemple, on peut citer les poly-titanocarbosilazanes (voir EP 417526), les polytitanosilylhydrazines (voir la demande de brevet FR 2670789), les polyaluminosilylhydrazines (voir la demande de brevet FR 2670789) et les composés renfermant une pluralité de motifs de formule :

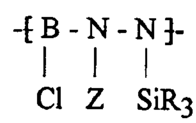

dans laquelle les groupements R, identiques ou différents, représentent un groupement alkyle contenant jusqu'à 12 atomes de carbone, Z pouvant représenter H ou $SiR_3$, ainsi que les borazines de formule :

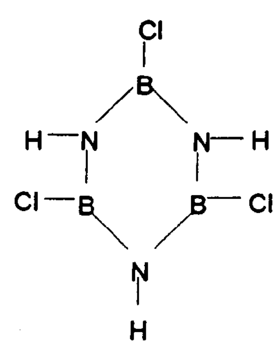

ou bien issues de la réaction de l'ammoniac avec une silylhydrazine de formule

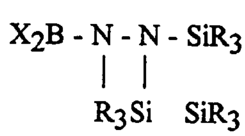

dans laquelle les groupements R, identiques ou différents, représentent des radicaux organiques contenant jusqu'à 12 atomes de carbone et X représente un halogène et notamment Br ou Cl (voir la demande de brevet EP 0524858).

On utilise avantageusement un précurseur ne contenant pas d'atome d'halogène ce qui permet d'éviter

la formation de dérivés halogénés corrosifs.

De préférence, on utilise un précurseur présentant un taux de résidu supérieur à 50 % défini par

$$T_R = \frac{M}{Mi} \times 100$$

avec

$T_R$ représentant le taux de résidu;

M représentant la masse obtenue après chauffage sous atmosphère d'azote (de 25°C à 500°C à raison de 100°C/heure puis 1 heure à 500°C) ;

Mi représentant la masse initiale de précurseur.

Lorsque le précurseur selon l'invention présente une viscosité trop importante pour permettre la formation de gouttes grossières, on peut ajouter un précurseur de faible viscosité. A titre d'exemple, et notamment lorsque le précurseur est un polysilane ou un polysilazane, on peut utiliser l'hexaméthyldisilazane. On peut, pour cela, utiliser tous mélanges appropriés permettant d'obtenir une viscosité adéquate.

La température de l'enceinte selon le procédé de l'invention est adaptée pour que les gouttes de précurseur soient brutalement portées à une température élevée permettant la transformation des gouttes en poudre. Généralement, on utilise une température supérieure à 500°C et de préférence comprise entre 600 et 1700°C.

Le temps de chauffage du procédé selon l'invention est suffisant pour les gouttes de précurseur soient transformées en poudre. A titre indicatif, pour une goutte de 1 mm de diamètre portée à 1000°C, ce temps peut varier de quelques dixièmes de seconde à quelques secondes.

La poudre obtenue selon le procédé de l'invention constitue également un objet de l'invention. En fonction de la température de l'enceinte utilisée dans le procédé selon l'invention, cette poudre peut se présenter sous une forme amorphe ou cristallisée.

A une température inférieure à 1350°C, on obtient, en général, une poudre amorphe caractérisée en ce qu'elle est constituée de N, C, H, O, M où M représente un métal choisi parmi le groupe constitué par Si, Al, Ti, B, et dont la composition en poids est telle que N = 0 - 60 %, C = 0 - 40 %, H = 0,5 - 10 %, 0 = 0,8 - 10 % et M = 20 - 80 % avec N et C ne pouvant pas être simultanément nuls. Selon le précurseur utilisé, cette poudre peut contenir un ou plusieurs métaux ou métalloïdes choisis parmi le groupe défini ci-avant.

La poudre amorphe selon l'invention est également caractérisée en ce qu'elle est infusible, insoluble à plus de 1 % en poids dans le toluène à 25°C et qu'elle comporte des particules de forme essentiellement sphérique et de diamètre supérieur à 0,2 μm, présentant une distribution homogène des grains telle que 90 % des particules ont un diamètre inférieur à 0,4 μm.

A une température supérieure à 1350°C, la poudre obtenue se présente sous une forme totalement ou partiellement cristallisée en fonction de la température utilisée. Cette poudre est caractérisée en ce que les grains, de forme indéfinie, présentent des cristallites de taille nanométrique et que sa composition chimique ne diffère de celle de la poudre amorphe que par le fait qu'elle ne contient pas d'atome d'hydrogène.

Selon une variante, on peut produire une poudre partiellement ou totalement cristallisée à partir de la poudre amorphe obtenue ci-avant par chauffage de cette poudre à une température comprise entre 1350 et 1700°C sous atmosphère gazeuse. La nature du gaz utilisé est la même que celle définie ci-avant.

Cette poudre amorphe ou cristallisée est particulièrement recommandée pour produire des articles en céramique présentant de bonnes propriétés thermomécaniques. De telles céramiques servent avantageusement à la fabrication de pièces d'usure et d'outils de coupe. Ces articles sont particulièrement utilisés dans les industries automobile et aéronautique et, à titre d'exemples, on peut citer les soupapes et patins de culbuteur automobiles ainsi que les turbines d'avion.

## EXEMPLE 1

Dans un réacteur à 0°C contenant 5,2 kg de toluène, 3,6 moles de $CH_3SiCl_3$, 5,4 moles de $CH_3SiHCl_2$, on introduit progressivement 38,9 moles d'ammoniac. Un précipité de chlorure d'ammonium apparaît. L'introduction de l'ammoniac dure 6 heures. Après 17 heures à température ambiante, la solution contenant le polysilazane est séparée du précipité par filtration et rincée par du toluène. Le toluène est éliminé par distillation à 75°C sous pression réduite à 100 mm de mercure.

Le polysilazane récupéré a une viscosité de 300 mPa.s à 50°C et 40 mPa.s à 100°C. Il présente une perte de poids de 25 % lorsque la température varie de l'ambiante à 300°C. Le rendement en céramique après chauffage à 1000°C sous atmosphère d'azote est de 55 %.

Le polysilazane obtenu est introduit dans le dispositif de la figure 1. Le four tubulaire [1] a un diamètre utile de 70 mm. La section des tubes [2] et [3] est respectivement égale à 53 et 28 mm. et leur longueur est 60 cm. On introduit l'azote à un débit de 30 l/h. La vitesse de rotation de la tige [5] est de 50 RPM. On forme une goutte de diamètre proche du millimètre toutes les 3 secondes. La température à l'intérieur du tube [3]

est de 800°C. On récupère au fond du tube [2] une poudre amorphe de couleur brune dont le diamètre moyen des grains, évalué par analyse d'image à partir d'examen au microscope électronique en transmission, est de 0,25 μm et dont 90 % des grains ont une taille inférieure à 0,4 μm. Cette poudre brune est ensuite cristallisée à 1600°C sous atmosphère d'azote. On mesure une perte de poids de 15 %. Les grains de poudre ainsi formés ont un diamètre voisin de 2 μm et leur examen par microscopie électronique en transmission révèle la présence de cristallites de taille inférieure à 100 nm. La composition de la poudre déterminée par diffraction des rayons X, est égale à 75 % $\alpha Si_3N_4$, 5 % $\beta Si_3N_4$ et 20 % $\beta SiC$.

EXEMPLE 2

On procède dans les conditions de l'exemple 1 en utilisant un dispositif modifié. Ce dispositif ne comporte pas la tige [5] munie du disque [6] et le système d'agitation [7]. Le tube capillaire [13] permettant l'introduction du polysilazane est maintenant engagé dans l'ouverture [4] et le fond du tube [2] comporte une surface en quartz inclinée à 45°.

On récupère une poudre réticulée brune dont l'observation en microscopie électronique à balayage montre qu'elle est constituée de grains de diamètre compris entre 0,2 et 0,5 μm et de forme voisine de la sphère. La composition de la poudre est Si = 55,8 %, C= 13,6%,N= 27,3 % et O = 2 %.

Cette poudre est introduite dans un creuset puis chauffée à 1600°C sous atmosphère d'azote. On détermine une perte de poids de 15 %. La composition est Si = 62 %, C = 13,1 %, N = 23 % et 0 = 1 %. Par diffraction des rayons X, on observe que les phases $\alpha$ $Si_3N_4$ et $\beta SiC$ sont majoritaires. La taille des cristallites de $\alpha Si_3N_4$, $\beta Si_3N_4$ et $\beta SiC$ est respectivement égale à 650, 600 et 100 Å.

EXEMPLE 3

On opère dans le dispositif de la figure 2. Le tube [20] de 3 m. de long et de 53 mm de diamètre est chauffé à 1100°C par 5 fours tubulaires [21] superposés. Le polysilazane obtenu dans l'exemple 1, préchauffé à 100°C, est introduit dans le tube [20] par l'intermédiaire du tube [24]. Le débit du polysilazane est de 20 g/h. L'azote est introduit par le tube [22] avec un débit de 50 l/h.

On récupère une poudre nanocomposite de couleur brune au fond du ballon de 10 litres [25]. La composition chimique de la poudre et l'aspect des grains observé par microscopie électronique à balayage sont sensiblement les mêmes que ceux de la poudre obtenue dans l'exemple 2.

EXEMPLE 4

On utilise le dispositif de la figure 2 pour produire une poudre à partir de polysilazanes et de gaz différents. La composition de la poudre formée par pyrolyse à 1000°C est indiquée dans le tableau 1.

Polysilazane A: ammonolysat obtenu selon l'exemple 1.

Polysilazane B : polysilazane dérivé de l'hydrazine de composition Si = 33%, C = 36%, N = 29%, H = 7,5%, renfermant 9,1 $10^{-3}$ mole/g de motifs -Si-C=C- et ayant une viscosité égale à 20 mPa.s à 150°C. Ce composé est commercialisé par Elf Atochem sous la marque Pyrofine PV®.

Polysilazane C : composé résultant de la réaction d'un mélange de chlorosilanes dont un comportant des liaisons de type ≡Si-H avec de l'ammoniac, de l'hydrazine et de l'eau. Ce composé, obtenu selon l'exemple 5 de la demande de brevet européen n° 88403263.2 modifié en ce que l'on utilise 0,8 mole de $SiHCH_3Cl_2$ et 0,2 mole de $Si(CH_3)_2Cl_2$, est commercialisé par Elf Atochem sous la marque Pyrofine PM®.

TABLEAU 1

| | | ANALYSE ELEMENTAIRE (%) | | | |
|---|---|---|---|---|---|
| POLYSILANE | GAZ | Si | C | N | O |
| A | $N_2$ | 55,8 | 13,6 | 27,3 | 2,0 |
| B | $N_2$ | 47,0 | 23,5 | 20,0 | 9,2 |
| | Ar | 46,5 | 24,5 | 22,3 | 6,0 |
| | $NH_3$ | 50,0 | 2,6 | 37,1 | 5,9 |
| C | $N_2$ | 55,0 | 14,0 | 25,0 | 6,7 |
| | Ar | 55,0 | 14,0 | 25,0 | 6,7 |
| | $NH_3$ | 51,5 | 0,3 | 36,6 | 5,4 |

## Revendications

1. Procédé de préparation par pyrolyse-flash de poudre amorphe ou cristallisée à base de nitrure et/ou de carbure métallique et/ou métalloidique pour la fabrication de céramique caractérisé en ce qu'il consiste à envoyer des gouttes grossières de précurseur dans une enceinte chauffée à une température et pendant un laps de temps suffisants pour obtenir une poudre.

2. Procédé selon la revendication 1 caractérisé en ce que le précurseur est choisi parmi les composés renfermant N, C, H, O, M où M est choisi parmi le groupe constitué par Si, Al, Ti, B et dont la composition en poids est telle que N = 0 - 60 %, C = 0 - 40 %, H =2 - 10 %, 0 = 0,8 - 10 % et M = 20 - 80 %, N et C ne pouvant pas être simultanément nuls.

3. Procédé selon l'une des revendications 1 ou 2 caractérisé en ce que le précurseur est liquide ou fusible à une température inférieure à la température de formation de la poudre.

4. Procédé selon l'une quelconque des revendications 1 à 3 caractérisé en ce que le précurseur est dilué dans un précurseur ou un mélange de précurseurs de faible viscosité.

5. Procédé selon la revendication 1 caractérisé en ce que les gouttes de précurseur ont un diamètre supérieur à 10 µm, de préférence à 50 µm et plus encore compris entre 100 µm et 5 mm.

6. Procédé selon la revendication 1 caractérisé en ce que la température de l'enceinte est supérieure à 500°C et de préférence comprise entre 600 et 1700 °C.

7. Procédé selon la revendication 1 caractérisé en ce qu'on fait circuler, à co-courant de la goutte et de la poudre en formation, un gaz choisi parmi l'azote, l'argon, l'hydrogène, l'ammoniac, l'hélium et les mélanges de ces gaz.

8. Procédé selon l'une quelconque des revendications 1 à 7 caractérisé en ce que la poudre, lorsqu'elle est obtenue sous forme amorphe ou partiellement cristallisée, est ultérieurement chauffée à une température suffisante pour augmenter sa cristallinité.

9. Procédé selon la revendication 8 caractérisé en ce que la température est comprise entre 1350 et 1700°C.

10. A titre de produit nouveau, une poudre amorphe à base de nitrure et/ou de carbure métallique et/ou métalloïdique caractérisée en ce qu'elle contient des particules de forme essentiellement sphérique et de diamètre supérieur à 0,2 µm, présentant une distribution homogène des grains telle que 90 % des particules ont un diamètre inférieur à 0,4 µm.

11. Poudre selon la revendication 10 caractérisée en ce qu'elle est infusible et insoluble à plus de 1 % en

poids dans le toluène à 25°C.

**12.** Poudre selon l'une des revendications 10 ou 11 caractérisée en ce qu'elle est constituée de N, C, H, O, M où M représente un métal choisi parmi le groupe constitué par Si, Al, B, Ti, et dont la composition en poids est telle que N = 0 - 60 %, C = 0 - 40 %, H= 0,5 - 10 %, 0 = 0,8 - 10 % et M = 20 - 80 %, N et C ne pouvant pas être simultanément nuls.

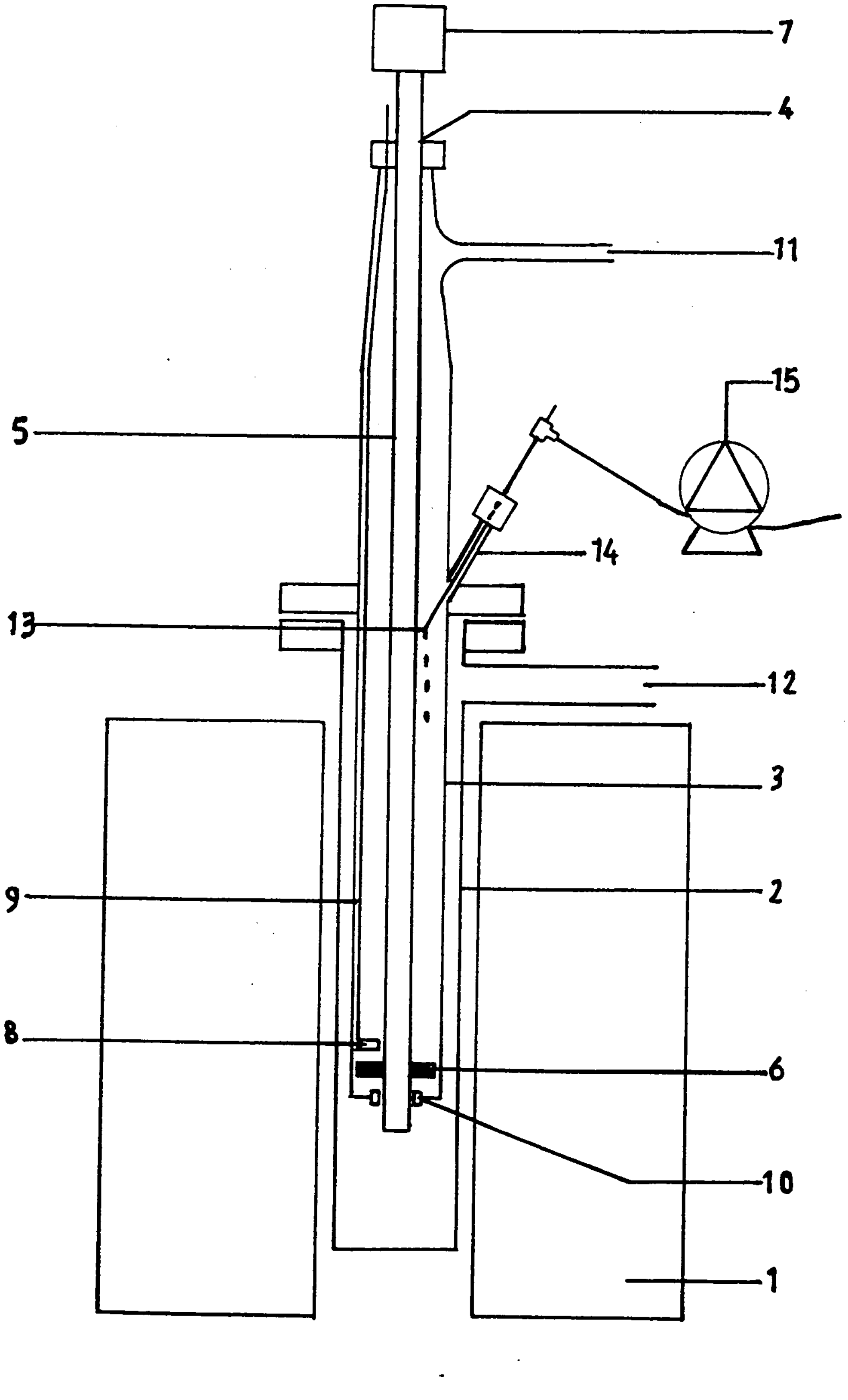


FIGURE 1

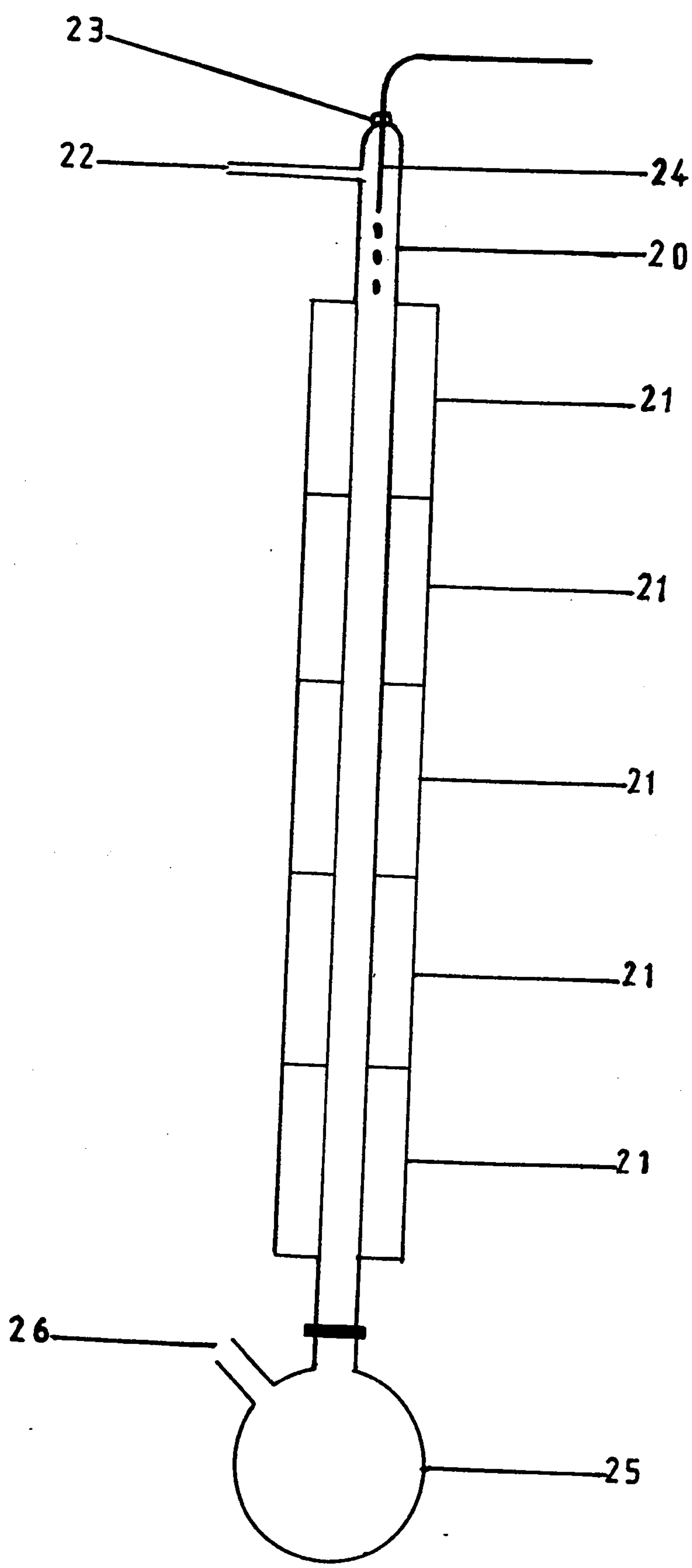


FIGURE 2

Office européen des brevets

# RAPPORT DE RECHERCHE EUROPEENNE

Numero de la demande
EP 94 40 0568

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| X | EP-A-0 379 910 (BASF)<br>* colonne 3, ligne 56 - colonne 4, ligne 4; revendications 1-3,6 *<br>--- | 1-12 | C01B21/06<br>C01B21/068<br>C01B31/30 |
| X | DE-A-40 22 210 (BASF)<br>* colonne 3, ligne 3 - ligne 9; revendication 1 *<br>--- | 1-12 | |
| X | EP-A-0 276 334 (MITSUBISHI GAS CHEMICAL)<br>* exemple 1 *<br>--- | 10-12 | |
| D,A | EP-A-0 417 526 (SHIN-ETSU CHEMICAL)<br>* le document en entier *<br>--- | 2 | |
| D,A | EP-A-0 493 995 (ELF ATOCHEM)<br>* le document en entier *<br>--- | 2 | |
| D,A | EP-A-0 524 858 (ELF ATOCHEM)<br>* le document en entier *<br>--- | 2 | |
| A | EP-A-0 420 718 (RHONE-POULENC CHIMIE)<br>* le document en entier *<br>--- | 6 | DOMAINES TECHNIQUES RECHERCHES (Int.Cl.5) |
| A | CHEMICAL ABSTRACTS, vol. 116, no. 18, Mai 1992, Columbus, Ohio, US;<br>abstract no. 177173y,<br>T. NAKAYASU ET AL. 'Manufacture of crystalline silicon nitride powder.'<br>page 175 ;<br>* abrégé *<br>& JP-A-03 295 801 (UBE INDUSTRIES)<br>----- | 8 | C01B<br>C04B |

Le présent rapport a été établi pour toutes les revendications

| Lieu de la recherche | Date d'achèvement de la recherche | Examinateur |
|---|---|---|
| LA HAYE | 16 Juin 1994 | Zalm, W |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)